(19) Europäisches Patentamt
European Patent Office
Office européen des brevets

(11) **EP 1 512 020 B1**

(12) **EUROPÄISCHE PATENTSCHRIFT**

(45) Veröffentlichungstag und Bekanntmachung des Hinweises auf die Patenterteilung:
**18.03.2015 Patentblatt 2015/12**

(21) Anmeldenummer: **03756971.2**

(22) Anmeldetag: **10.06.2003**

(51) Int Cl.:
*G01P 15/18* (2013.01)   *G01P 15/125* (2006.01)

(86) Internationale Anmeldenummer:
**PCT/DE2003/001922**

(87) Internationale Veröffentlichungsnummer:
**WO 2003/104823 (18.12.2003 Gazette 2003/51)**

(54) **MEHRACHSIGER MONOLITHISCHER BESCHLEUNIGUNGSSENSOR**

MULTIAXIAL MONOLITHIC ACCELERATION SENSOR

CAPTEUR D'ACCELERATION MONOLITHIQUE A PLUSIEURS AXES

(84) Benannte Vertragsstaaten:
**DE FR GB IT**

(30) Priorität: **11.06.2002 DE 10225714**

(43) Veröffentlichungstag der Anmeldung:
**09.03.2005 Patentblatt 2005/10**

(60) Teilanmeldung:
**14003327.5**

(73) Patentinhaber: **Conti Temic Microelectronic GmbH**
**90411 Nürnberg (DE)**

(72) Erfinder:
• **KAPSER, Konrad**
**81379 München (DE)**
• **PRECHTEL, Ulrich**
**81735 München (DE)**
• **SEIDEL, Helmut**
**82319 Starnberg (DE)**

(74) Vertreter: **Klinski, Robert et al**
**Patentship**
**Patentanwaltsgesellschaft mbH**
**Elsenheimerstraße 65**
**80687 München (DE)**

(56) Entgegenhaltungen:
DE-A- 3 741 036    DE-A- 19 649 715
JP-A- 09 072 930

**Beschreibung**

Die Erfindung betrifft einen drei- bzw. zweiachsigen monolithischen Beschleunigungssensor nach dem Oberbegriff des Patentanspruchs 1 bzw. 3.

Aus der US-Patentschrift US 6 122 965 A bzw. aus der korrespondierenden deutschen Patentschrift DE 196 49 715 C2 ist eine Anordnung zum Messen von Beschleunigungen bekannt, die aus vier einzelnen, auf einem gemeinsamen Substrat in einem Rechteck angeordneten Einzelsensoren mit jeweils einer Hauptempfindlichkeitsachse besteht. Jeder Einzelsensor weist ein Paddel mit einem Schwerpunkt als seismische Masse auf. Die Hauptempfindlichkeitsachsen der jeweiligen Einzelsensoren weisen jeweils einen Fehlwinkel zur Normalen der Substratoberfläche auf. Die Richtung jeder Rechteckseite und die zugehörige Hauptempfindlichkeitsachse spannen jeweils eine Ebene auf und die Ebenen der auf einer Diagonale liegenden Einzelsensoren sind einander zugeneigt.

Nachteilig hierbei ist, dass der Fehlwinkel zwischen einer Hauptempfindlichkeitsachse und der Normalen zur Substratoberfläche nur in einem begrenzten Bereich von höchstens 20° einstellbar ist.

Aus der PCT-Anmeldung WO 89/05459 ist ein mikromechanischer Beschleunigungsmesser bekannt, bei dem zur Erfassung mehrdimensionaler Bewegungsänderungen drei jeweils für die Beschleunigung in einer ausgewählten Richtung empfindliche mikromechanische Sensoren monolithisch in einem Kristall integriert sind. Die Sensoren bestehen aus Torsionsbalken mit exzentrisch angebrachten Massen, die bei Bewegungsänderungen Drehmomente um die Achsen der Torsionsbalken ausüben. Die Drehmomente werden mit Hilfe integrierter Piezowiderstände gemessen.

Dieser Beschleunigungsmesser weist Einzelelemente unterschiedlicher Konstruktionsprinzipien in Bezug auf die X- und Y-Achse bzw. die Z-Achse auf. Daraus ergeben sich unterschiedliche Eigenschaften hinsichtlich Empfindlichkeit, Frequenzgang oder Dämpfungsverhalten. Ferner werden hohe Anforderungen an die Auswerteelektronik gestellt, was den Einsatz in Fahrzeugen nahezu ausschließt.

Die Patentschrift JPH0972930A offenbart mehrachsige monolithische Beschleunigungssensoren, bestehend aus mehreren identischen auf gemeinsamem Substrat angeordneten kapazitiven Einzelsensoren, bei welchen jeweils die seismische Masse mittels Torsionsfederelementen exzentrisch gegenüber ihrem Schwerpunkt aufgehängt ist und bei welchen jeweils zwei um 180° gegeneinander um die Substratflächennormale verdrehte Einzelsensoren Sensorpaare bilden. Die Verwendung von zwei oder mehreren von um ungleich 180° gegeneinander um die Substratflächennormale verdrehten Sensorpaaren erlaubt Beschleunigungsmessungen in mehr als zwei Beschleunigungsrichtungen.

Der Erfindung liegt die Aufgabe zugrunde, einen Beschleunigungssensor nach dem Oberbegriff des Anspruchs 1 bzw. 3 so zu gestalten, dass ein größerer Fehlwinkel einstellbar ist und die Signale der Einzelsensoren schnell und einfach ausgewertet werden können.

Gelöst wird diese Aufgabe durch einen drei- bzw. zweiachsigen monolithischen Beschleunigungssensor mit den im Anspruch 1 bzw. 3 angegebenen Merkmalen.

Der Gegenstand des Anspruchs 1 bzw. 3 weist die Vorteile auf, dass ein größerer und auch idealer Fehlwinkel von 45° eingestellt ist und das auf planare, differentielle kapazitive Signalauslesung ausgerichtete Messprinzip zu besonders stabilen Sensoren führt.

Die Erfindung eignet sich insbesondere für hochwertige, offsetstabile kapazitive Sensoren zum Einsatz in Fahrzeugen.

Vorteilhafte Ausgestaltungen des Beschleunigungssensors nach Anspruch 1 bzw. 3 sind in den Unteransprüchen angegeben.

Die Erfindung wird nun anhand eines Ausführungsbeispiels unter Zuhilfenahme der Zeichnung erläutert.

Es zeigen

Fig. 1: eine Draufsicht auf einen erfindungsgemäßen Beschleunigungssensor, bestehend aus vier identischen Einzelsensoren auf einem gemeinsamen Substrat,

Fig. 2: eine Schnittzeichnung durch die Anordnung nach Fig. 1 mit zwei Einzelsensoren und deren seismischer Masse,

Fig. 3a: die Auslenkung der seismischen Massen der Einzelsensoren nach Fig. 2 in Folge einer in X-Richtung wirkenden beschleunigenden Kraft und

Fig. 3b: die Auslenkung der seismischen Massen der Einzelsensoren nach Fig. 2 in Folge einer in Z-Richtung wirkenden beschleunigenden Kraft.

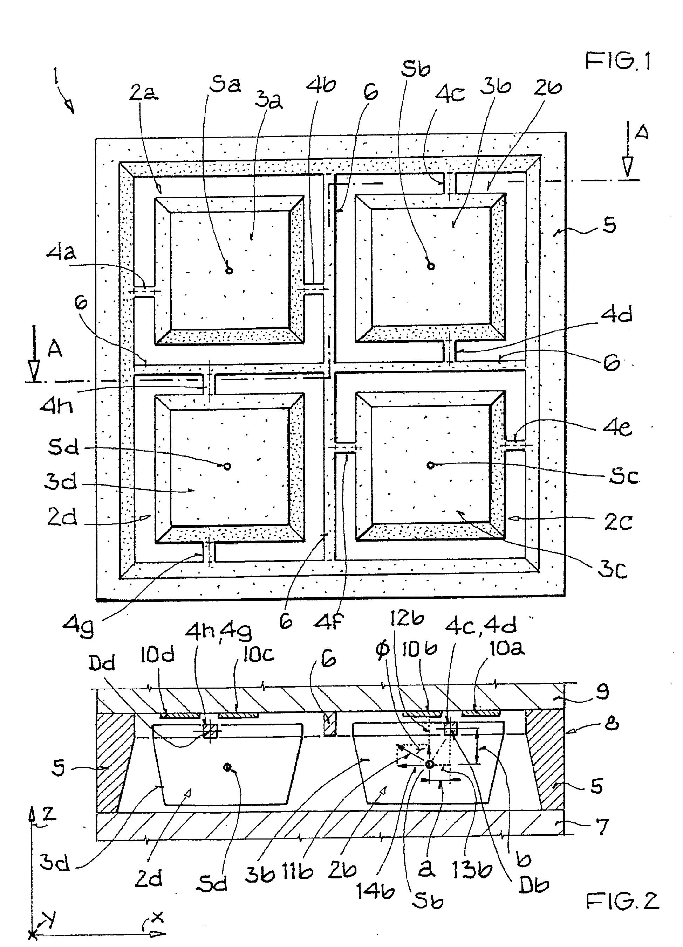

Die **Fig. 1** zeigt einen Beschleunigungssensor **1** zur dreiachsigen Messung von Beschleunigungen, bestehend aus vier identischen Einzelsensoren **2a, 2b, 2c** und **2d**. Jeder Einzelsensor **2a-d** weist eine seismische Masse **3a, 3b, 3c** bzw. **3d** mit einem Schwerpunkt $S_a$, $S_b$, $S_c$ und $S_d$ auf, wobei jede seismische Masse **3a-d** exzentrisch gegenüber ihrem Schwerpunkt $S_a$, $S_b$, $S_c$ und $S_d$ an zwei Torsionsfederelementen **4a, 4b, 4c, 4d, 4e, 4f, 4g** bzw. **4h** drehbeweglich aufgehängt ist. Jedes Torsionsfederelement **4a-g** ist seinerseits wiederum mit einem Außenrahmen **5** verbunden. Der Außenrahmen **5** hält die vier Einzelsensoren **2a-d** zusammen und ist durch einen Zwischenrahmen **6** unterteilt.

Eine aus lediglich zwei Einzelsensoren 2a und 2c bzw. 2b und 2d bestehende Anordnung kann als Sensorelement zur Messung von zweiachsigen Beschleunigungen verwendet werden; zur Messung von dreiachsigen Beschleunigungen werden wenigstens drei der vier Einzelsensoren **2a-d** benötigt. Jeder Einzelsensor **2a-d** ist gegenüber den drei anderen Einzelsensoren **2a-d** um 90°, 180° und 270°, allgemein ein Vielfaches von 90°, gedreht. Bei der Verwendung aller vier Einzelsensoren **2a-d** ist eine redundante Information vorhanden, die eine permanente Konsistenzprüfung der Ausgangssignale ermöglicht.

In **Fig. 2** ist der Beschleunigungssensor **1** der Fig. 1 im Schnitt A-A dargestellt. Eine aus Silizium bestehende und auf bekannte mikromechanische Weise strukturierte Scheibe ist als gemeinsames Substrat **8** der vier Einzelsensoren **2a-d** zwischen einer unteren Deckscheibe **7** und einer oberen Deckscheibe **9** angeordnet und beispielsweise durch Wafer-Bondung mit diesen verbunden, wobei die untere Deckscheibe **7** und die obere Deckscheibe **9** ebenfalls aus Silizium bestehen. Mittels eines Ätzprozesses sind in die Scheibe **8** die seismischen Massen **2a-d** der Einzelsensoren **3a-d**, die Torsionsfederelemente **4a-h** und der Zwischenrahmen **6** strukturiert.

Auf der Innenseite der oberen Deckscheibe **9** sind über jeder seismischen Masse **3** und vorzugsweise symmetrisch zur vom jeweiligen Torsionsfederelement **4** definierten Torsionsachse metallisierte, von einander isolierte Flächen **10a, 10b, 10c** und **10d** strukturiert, die zur differentiellen kapazitiven Messung der Drehbewegung einer seismischen Masse **3** beim Einwirken einer Beschleunigungskraft dienen.

Jede seismische Masse **3a-d** weist eine durch den jeweiligen Schwerpunkt $S_a$, $S_b$, $S_c$ und $S_d$ verlaufende Hauptempfindlichkeitsachse **11** auf, dargestellt am Einzelsensor **2b** mit der Hauptempfindlichkeitsachse **11b** und analog geltend für die Einzelsensoren **2a, 2c** und **2d,** deren Richtung infolge der einseitigen Aufhängung der seismischen Masse **3b** und infolge des ausgelagerten Masseschwerpunkts $S_b$ nicht parallel zu einer jeweiligen Normalen **12b** verläuft.

Die Aufhängung der seismischen Masse **3b** an zwei Torsionsfederelementen **4c, 4d** ergibt eine Drehachse $D_b$, um den sich die seismische Masse 3b beim Einwirken einer beschleunigenden Kraft dreht. Bezeichnet man den Abstand zwischen der Drehachse $D_b$ und dem Schwerpunkt $S_b$ in X-Richtung als Abstand a und den Abstand zwischen der Drehachse $D_b$ und dem Schwerpunkt $S_b$ in Z-Richtung als Abstand b, so berechnet sich der Fehlwinkel $\Phi$ folgendermaßen:

$$\tan \Phi = \frac{b}{a}.$$

Der Fehlwinkel $\Phi$ lässt sich über die Gestaltung jeder seismischen Masse **3** über weite Grenzen einstellen. Aufgrund des identischen Aufbaus ist der Fehlwinkel $\Phi$ bei allen Einzelsensoren **2a-d** gleich groß; geeignete Werte für den Fehlwinkel $\Phi$ sind frei einstellbar, auch der erfindungsgemäße Fehlwinkel $\Phi$ von 45° als Idealfall im orthogonalen Koordinatensystem.

Um in X-, Y- und Z-Richtung wirkende Beschleunigungskräfte messen zu können, wird die Hauptempfindlichkeitsachse **11b** in eine Komponente **13b** parallel zur Normalen **12b** und in eine Komponente **14b** senkrecht zur Normalen **12b** zerlegt.

Die zum Einzelsensor **2b** gemachten Aussagen gelten analog auch für die Einzelsensoren **2a, 2c** und **2d.** Da die Einzelsensoren **2a-d** und insbesondere die seismischen Massen **3a-d** bedingt durch den Herstellungsprozeß weitgehend gleiche geometrische Abmessungen aufweisen, ist jeweils ihre Empfindlichkeit in X-Richtung, ihre Empfindlichkeit in Y-Richtung und ihre Empfindlichkeit in Z-Richtung ebenfalls weitgehend gleich.

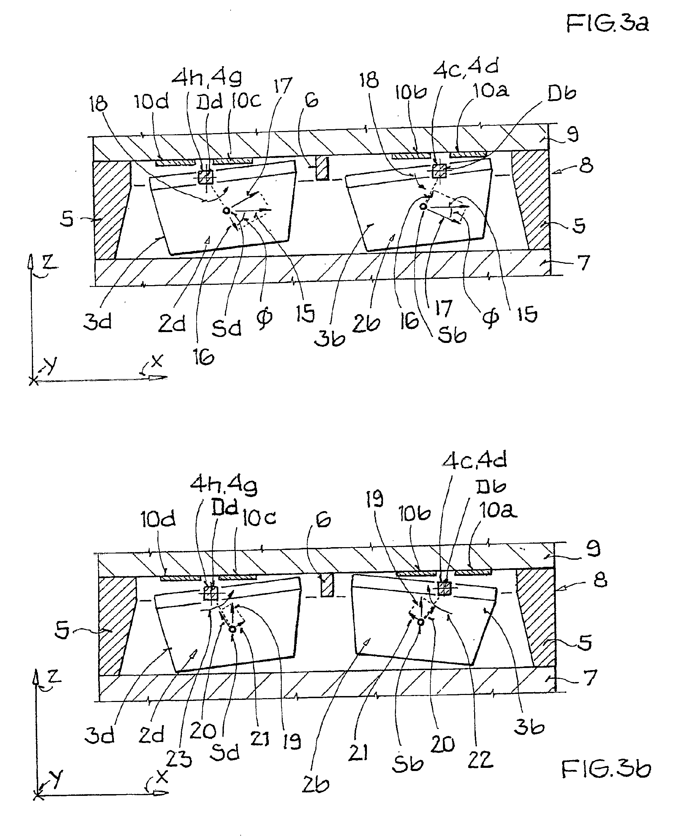

**Fig. 3a** zeigt die Auslenkung der seismischen Massen **3b** und **3d** der Einzelsensoren **2b** und **2d** nach Fig. 2 in Folge einer in X-Richtung wirkenden beschleunigenden Kraft, die durch einen Pfeil **15** dargestellt ist. Das Zerlegen der beschleunigenden Kraft **15** ergibt eine Komponente **16** auf der Geraden durch $D_d$ und $S_d$ und eine Komponente **17** senkrecht dazu. Die Komponente **17** führt zu einer Drehbewegung der seismischen Masse **3b** bzw. **3d** um die Drehachse $D_b$ bzw. $D_d$, die durch differentielle kapazitive Messung mittels der metallischen Flächen **10a** und **10b** bzw. **10c** und **10d** detektiert wird. Durch trigonometrische Gleichungen wird die Größe der auf den Sensor **1** einwirkenden beschleunigenden Kraft **15** berechnet.

Bei einer in X-Richtung wirkenden beschleunigenden Kraft **15** ist die Drehbewegung der seismischen Masse **3b** bzw. **3d** um die Drehachse $D_b$ bzw. $D_d$ gemäß eines Pfeiles **18** gleichsinnig, die seismischen Massen **3a** und **3c** (Fig. 1) erfahren keine Drehbewegung.

Bei einer in Y-Richtung wirkenden beschleunigenden Kraft erfahren die seismischen Massen **3a** bzw. **3c** eine Drehbewegung um die Längsachse der Torsionselemente **4a** und **4b** bzw. **4e** und **4f**, hingegen erfahren in diesem Fall die seismischen Massen **3b** bzw. **3d** keine Drehbewegung um ihre Drehachse $D_b$ bzw. $D_d$.

**Fig. 3b** zeigt die Auslenkung der seismischen Massen **3b** und **3d** der Einzelsensoren **2b** und **2d** nach Fig. 2 in Folge einer in Z-Richtung wirkenden beschleunigenden Kraft, dargestellt durch einen Pfeil **19**. Analog zum Beispiel der Fig. 3a ergibt das Zerlegen der beschleunigenden Kraft **19** eine Komponente **20** auf der Geraden durch $D_d$ und $S_d$ und eine Komponente **21** senkrecht dazu. Die Komponente **21** führt zu einer Drehbewegung der seismischen Masse **3b** bzw. **3d** um die Drehachse $D_b$ bzw. $D_d$, die wiederum durch differentielle kapazitive Messung mittels der metallischen Flächen **10a** und **10b** bzw. **10c** und **10d** detektiert wird. Durch trigonometrische Gleichungen wird die Größe der auf den Sensor **1** einwirkenden beschleunigenden Kraft **19** berechnet.

Bei einer in Z-Richtung wirkenden beschleunigenden Kraft **19** ist die Drehbewegung der seismischen Masse **3b** bzw. **3d** um die Drehachse **D_b** bzw. **D_d** gemäß eines Pfeiles **22** bzw. **23** gegensinnig. Zudem ist die Drehbewegung der seismischen Masse **3a** (Fig. 1) gegensinnig zur Drehbewegung der seismischen Masse **3c**.

**Patentansprüche**

1. Dreiachsiger monolithischer Beschleunigungssensor (1), der folgende Merkmale aufweist:

   a) der Beschleunigungssensor (1) besteht aus mehreren, auf einem gemeinsamen Substrat (8) angeordneten Einzelsensoren (2a-d) mit jeweils einer Hauptempfindlichkeitsachse (11),
   b) jeder Einzelsensor (2a-d) weist eine seismische Masse (3a-d) mit einem Schwerpunkt ($S_a$, $S_b$, $S_c$, $S_d$) auf, welche an zwei Torsionsfederelementen (4a-h) drehbeweglich aufgehängt ist,
   c) jeder Einzelsensor (2a-d) weist Mittel zur Messung (10) der Auslenkung der seismischen Masse (3a-d) auf,
   **dadurch gekennzeichnet, dass**
   d) der Beschleunigungssensor (1) aus wenigstens drei identischen Einzelsenoren (2a-d) besteht,
   e) die seismische Masse jedes Einzelsensors (2a-d) exzentrisch gegenüber ihrem Schwerpunkt ($S_a$, $S_b$, $S_c$, $S_d$) aufgehängt ist und
   f) der jeweilige Einzelsensor gegenüber den anderen Einzelsensoren (2a-d) um 90°, 180° oder 270° gedreht ist,
   g) wobei sich ein Fehlwinkel Φ gemäß

   $$\tan \Phi = \frac{b}{a}.$$

   ergibt, wobei a den Abstand zwischen der Drehachse ($D_b$) und dem Schwerpunkt ($S_b$) in X- bzw. Y-Richtung und b den Abstand zwischen der Drehachse ($D_b$) und dem Schwerpunkt ($S_b$) in Z-Richtung bezeichnet,
   h) wobei ein Fehlwinkel Φ von 45° eingestellt ist.

2. Beschleunigungssensor nach Anspruch 1, **dadurch gekennzeichnet, dass** die wenigstens drei identischen Einzelsensoren (2a-d) in einem Rechteck angeordnet sind.

3. Zweiachsiger monolithischer Beschleunigungssensor (1), der folgende Merkmale aufweist:

   a) der Beschleunigungssensor (1) besteht aus zwei, auf einem gemeinsamen Substrat (8) angeordneten Einzelsensoren (2a-d) mit jeweils einer Hauptempfindlichkeitsachse (11),
   b) jeder Einzelsensor (2a-d) weist eine seismische Masse (3a-d) mit einem Schwerpunkt ($S_a$, $S_b$, $S_c$, $S_d$) auf, welche an zwei Torsionsfederelementen (4a-h) drehbeweglich aufgehängt ist,
   c) jeder Einzelsensor (2a-d) weist Mittel zur Messung (10) der Auslenkung der seismischen Masse (3a-d) auf,
   **dadurch gekennzeichnet, dass**
   d) der Beschleunigungssensor (1) aus zwei identischen Einzelsensoren (2a-d) besteht,
   e) die seismische Masse jedes Einzelsensors (2-d) exzentrisch gegenüber ihrem Schwerpunkt ($S_a$, $S_b$, $S_c$, $S_d$) aufgehängt ist und der eine Einzelsensor gegenüber dem anderen Einzelsensor (2a-d) um 180° gedreht ist.
   g) wobei sich ein Fehlwinkel Φ gemäß

   $$\tan \Phi = \frac{b}{a}.$$

   ergibt, wobei a den Abstand zwischen der Drehachse ($D_b$) und dem Schwerpunkt ($S_b$) in X- bzw. Y-Richtung und b den Abstand zwischen der Drehachse ($D_b$) und dem Schwerpunkt ($S_b$) - in Z-Richtung bezeichnet,
   h) wobei ein Fehlwinkel Φ von 45° eingestellt ist.

4. Beschleunigungssensor nach einem der vorhergehenden Ansprüche, **dadurch gekennzeichnet, dass** der Fehlwinkel Φ bei allen Einzelsensoren **2a-d** gleich groß ist.

5. Beschleunigungssensor nach einem der Ansprüche 1 bis 4, **dadurch gekennzeichnet, dass** das Substrat (8) zur Abdichtung und zum Schutz vor Umwelteinflüssen zwischen einer unteren Deckscheibe (7) und einer oberen Deckscheibe (9) angeordnet ist.

6. Beschleunigungssensor nach einem der Ansprüche 1 bis 5, **dadurch gekennzeichnet, dass** die Auslenkung jeder seismischen Masse (3a-d) mittels einer differentiellen kapazitiven Messung erfolgt.

7. Beschleunigungssensor nach Anspruch 6, **dadurch gekennzeichnet, dass** zur differentiellen kapazitiven Messung an der oberen Deckscheibe (9) in der Nähe der durch das jeweilige Torsionsfederelement (4a-h) definierten Torsionsachse metallisierte und von einander isolierte Flächen (10a-d) strukturiert sind.

8. Beschleunigungssensor nach Anspruch 7, **dadurch gekennzeichnet, dass** die Flächen (10a-d) symmetrisch zu der durch das jeweilige Torsionsfederelement (4a-h) definierten Torsionsachse angeordnet sind.

## Claims

1. Triaxial monolithic acceleration sensor (1) which has the following features:

   a) the acceleration sensor (1) consists of a plurality of individual sensors (2a-d) arranged on a common substrate (8) and each having a main sensitivity axis (11),
   b) each individual sensor (2a-d) has a seismic mass (3a-d) with a centre of gravity ($S_a$, $S_b$, $S_c$, $S_d$), which seismic mass is suspended from two torsion spring elements (4a-h) so as to be able to move rotationally,
   c) each individual sensor (2a-d) has means for measuring (10) the deflection of the seismic mass (3a-d),
   **characterized in that**
   d) the acceleration sensor (1) consists of at least three identical individual sensors (2a-d),
   e) the seismic mass of each individual sensor (2a-d) is suspended eccentrically relative to its centre of gravity ($S_a$, $S_b$, $S_c$, $S_d$), and
   f) the respective individual sensor is rotated by 90°, 180° or 270° relative to the other individual sensors (2a-d),
   g) an error angle $\Phi$ resulting in accordance with

   $$\tan \Phi = \frac{b}{a}$$

   where a denotes the distance between the axis of rotation ($D_b$) and the centre of gravity ($S_b$) in the X- and the Y-directions, and b denotes the distance between the axis of rotation ($D_b$) and the centre of gravity ($S_b$) in the Z-direction,
   h) an error angle $\Phi$ of 45° being set.

2. Acceleration sensor according to Claim 1, **characterized in that** the at least three identical individual sensors (2a-d) are arranged in a rectangle.

3. Biaxial monolithic acceleration sensor (1) which has the following features:

   a) the acceleration sensor (1) consists of two individual sensors (2a-d) arranged on a common substrate (8) and each having a main sensitivity axis (11),
   b) each individual sensor (2a-d) has a seismic mass (3a-d) with a centre of gravity ($S_a$, $S_b$, $S_c$, $S_d$), which seismic mass is suspended from two torsion spring elements (4a-h) so as to be able to move rotationally,
   c) each individual sensor (2a-d) has means for measuring (10) the deflection of the seismic mass (3a-d),
   **characterized in that**
   d) the acceleration sensor (1) consists of at least two identical individual sensors (2a-d),
   e) the seismic mass of each individual sensor (2a-d) is suspended eccentrically relative to its centre of gravity ($S_a$, $S_b$, $S_c$, $S_d$), and one individual sensor is rotated by 180° relative to the other individual sensor (2a-d),
   g) an error angle $\Phi$ resulting in accordance with

   $$\tan \Phi = \frac{b}{a}$$

   where a denotes the distance between the axis of rotation ($D_b$) and the centre of gravity ($S_b$) in the X- and the Y-directions, and b denotes the distance between the axis of rotation ($D_b$) and the centre of gravity ($S_b$) in the Z-direction,
   h) an error angle $\Phi$ of 45° being set.

4. Acceleration sensor according to one of the preceding claims, **characterized in that** the error angle $\Phi$ is the same size for all individual sensors 2a-d.

5. Acceleration sensor according to one of Claims 1 to 4, **characterized in that** the substrate (8) is arranged between a lower cover plate (7) and an upper cover plate (9) in order to be sealed and protected against environmental influences.

6. Acceleration sensor according to one of Claims 1 to 5, **characterized in that** the deflection of each seismic mass (3a-d) is performed by means of a differential capacitive measurement.

7. Acceleration sensor according to Claim 6, **characterized in that** for the purpose of differential capacitive measurement, metallized and mutually isolated areas (10a-d) are structured on the upper cover plate (9) in the vicinity of the torsion axis defined by the respective torsion spring element (4ah).

8. Acceleration sensor according to Claim 7, **characterized in that** the areas (10a-d) are arranged symmetrically relative to the torsion axis defined by the respective torsion spring element (4a-h).

## Revendications

1. Capteur d'accélération (1) monolithique à trois axes qui présente les caractéristiques suivantes :

   a) le capteur d'accélération (1) se compose de plusieurs capteurs individuels (2a-d) disposés sur un substrat (8) commun, ayant chacun un axe de sensibilité principal (11),

b) chaque capteur individuel (2a-d) présente une masse sismique (3a-d) avec un centre de gravité ($S_a$, $S_b$, $S_c$, $S_d$) qui est suspendue avec mobilité rotationnelle à deux éléments à ressort de torsion (4a-h),

c) chaque capteur individuel (2a-d) présente des moyens de mesure (10) de la déviation de la masse sismique (3a-d),

**caractérisé en ce que**

d) le capteur d'accélération (1) se compose d'au moins trois capteurs individuels (2a-d) identiques,

e) la masse sismique de chaque capteur individuel (2a-d) est suspendue de manière excentrique par rapport à son centre de gravité ($S_a$, $S_b$, $S_c$, $S_d$) et

f) un capteur individuel respectif est pivoté de 90°, 180° ou 270° par rapport aux autres capteurs individuels (2a-d),

g) ce qui résulte en un déphasage $\phi$ selon

$$\tan\phi = \frac{b}{a}$$

où a désigne l'écart entre l'axe de rotation ($D_b$) et le centre de gravité ($S_b$) dans la direction X ou Y et b l'écart entre l'axe de rotation ($D_b$) et le centre de gravité ($S_b$) dans la direction Z,

h) un déphasage $\phi$ de 45° étant réglé.

**2.** Capteur d'accélération selon la revendication 1, **caractérisé en ce que** les au moins trois capteurs individuels (2a-d) identiques sont disposés en un rectangle.

**3.** Capteur d'accélération (1) monolithique à deux axes qui présente les caractéristiques suivantes :

a) le capteur d'accélération (1) se compose de deux capteurs individuels (2a-d) disposés sur un substrat (8) commun, ayant chacun un axe de sensibilité principal (11),

b) chaque capteur individuel (2a-d) présente une masse sismique (3a-d) avec un centre de gravité ($S_a$, $S_b$, $S_c$, $S_d$) qui est suspendue avec mobilité rotationnelle à deux éléments à ressort de torsion (4a-h),

c) chaque capteur individuel (2a-d) présente des moyens de mesure (10) de la déviation de la masse sismique (3a-d),

**caractérisé en ce que**

d) le capteur d'accélération (1) se compose de deux capteurs individuels (2a-d) identiques,

e) la masse sismique de chaque capteur individuel (2a-d) est suspendue de manière excentrique par rapport à son centre de gravité ($S_a$, $S_b$, $S_c$, $S_d$) et l'un des capteurs individuels est pivoté de 180° par rapport à l'autre capteur individuel (2a-d),

g) ce qui résulte en un déphasage $\phi$ selon

$$\tan\phi = \frac{b}{a}$$

où a désigne l'écart entre l'axe de rotation ($D_b$) et le centre de gravité ($S_b$) dans la direction X ou Y et b l'écart entre l'axe de rotation ($D_b$) et le centre de gravité ($S_b$) dans la direction Z,

h) un déphasage $\phi$ de 45° étant réglé.

**4.** Capteur d'accélération selon l'une des revendications précédentes, **caractérisé en ce que** le déphasage $\phi$ est identique au niveau de tous les capteurs individuels (2a-d).

**5.** Capteur d'accélération selon l'une des revendications 1 à 4, **caractérisé en ce que** le substrat (8), en vue de l'étanchéité et de la protection contre les effets de l'environnement, est disposé entre une plaque de recouvrement inférieure (7) et une plaque de recouvrement supérieure (9).

**6.** Capteur d'accélération selon l'une des revendications 1 à 5, **caractérisé en ce que** la déviation de chaque masse sismique (3a-d) s'effectue au moyen d'une mesure capacitive différentielle.

**7.** Capteur d'accélération selon la revendication 6, **caractérisé en ce qu'**en vue de la mesure capacitive différentielle, des surfaces (10a-d) métallisées et isolées les unes des autres sont structurées sur la plaque de recouvrement supérieure (9) à proximité de l'axe de torsion défini par l'élément à ressort de torsion (4a-h) respectif.

**8.** Capteur d'accélération selon la revendication 7, **caractérisé en ce que** les surfaces (10a-d) sont disposées de manière symétrique par rapport à l'axe de torsion défini par l'élément à ressort de torsion (4ah) correspondant.

EP 1 512 020 B1

FIG.1

FIG.2

FIG.3a

FIG.3b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6122965 A
- DE 19649715 C2

- WO 8905459 A